# EUROPEAN PATENT APPLICATION

(11) **EP 3 352 029 A1**
(43) Date of publication of application: **25.07.2018**
(21) Application number: 17196750.8
(22) Date of filing: 17.10.2017
(51) Int. Cl.: G05B 17/02

(54) **CONTROL DEVICE, CONTROL PROGRAM, AND CONTROL SYSTEM**

(30) Priority: 24.01.2017 JP 2017010035
(71) Applicant: Omron Corporation, Kyoto-shi, Kyoto 600-8530 (JP)
(72) Inventor: NAMIE, Masaki, Kyoto-shi, Kyoto 600-8530 (JP); AZIZAN, SitiAisyah, Kyoto-shi, Kyoto 600-8530 (JP); MANABE, Mikiko, Kyoto-shi, Kyoto 600-8530 (JP); FUJII, Takashi, Kyoto-shi, Kyoto 600-8530 (JP)
(74) Representative: Becker Kurig Straus

(57) **Abstract**

A control device, a control program and a control system for facilitating creation of a dynamic characteristic model for an arbitrarily selected controlled object are provided. The control device is connected to a control instrument having a feedback control loop. The control device includes an input device for applying an identification input to the control instrument, a collection device for collecting an identification output, which corresponds to the identification input, from the control instrument, and a creation device for creating a dynamic characteristic model reflecting dynamic characteristics of a controlled object controlled by the control instrument and dynamic characteristics of the feedback control loop included in the control instrument, based on the identification input and the identification output.

## Description

### BACKGROUND OF THE INVENTION

### Field of the Invention

The present invention relates to a technology of facilitating creation of a dynamic characteristic model related to an arbitrarily selected controlled object.

### Description of Related Art

In the related art, there has been a demand for controlling various types of manufacturing apparatuses and production machines at a high speed and with high accuracy. In regard to such a demand, various control methods are being proposed.

For example, Japanese Unexamined Patent Application Publication No. 2014-002474 (Patent Document 1) discloses a servo control device which reduces a tracking error caused when a moving direction of a machine is reversed. The servo control device disclosed in Patent Document 1 employs a configuration using a machine end response simulation unit which inputs a command position and computes a model machine end position, and a motor end position estimation unit which inputs the model machine end position and computes a model motor end position.

As described above, there is a known technique in which a controlled object is modeled and a control computation is then executed.

### [Prior Art Document]

### [Patent Documents]

[Patent Document 1] Japanese Unexamined Patent Application Publication No. 2014-002474

### SUMMARY OF THE INVENTION

The above-referenced Patent Document 1 discloses a servo control device which controls driving of a device such as a machine tool on the premise that a known device is modeled. However, when performing control using a control device, a servo driver, or the like in general use, there are many cases where a controlled object is unknown. In such cases, expert knowledge and the like are often required in order to appropriately model a controlled object. For such reasons, it has not been easy to realize control over all of controlled objects at a high speed and with high accuracy.

Therefore, there is a demand for a technology of facilitating creation of a dynamic characteristic model related to an arbitrarily selected controlled object.

According to a certain aspect of the present invention, there is provided a control device connected to a control instrument having a feedback control loop. The control device includes an input device for applying an identification input to the control instrument, a collection device for collecting an identification output, which corresponds to the identification input, from the control instrument, and a creation device for creating a dynamic characteristic model reflecting dynamic characteristics of a controlled object controlled by the control instrument and dynamic characteristics of the feedback control loop included in the control instrument, based on the identification input and the identification output.

It is preferable that the control device further include an output device for outputting a characteristic parameter which defines the created dynamic characteristic model.

It is preferable that the control device further include an output device for visually outputting response characteristics of the created dynamic characteristic model.

It is preferable that the creation device creates a plurality of dynamic characteristic models having characteristic parameters different from each other, and determines one dynamic characteristic model from among the plurality of dynamic characteristic models.

It is preferable that the control device further include an evaluation device for evaluating the plurality of dynamic characteristic models based on one or a plurality of evaluation criteria so that a dynamic characteristic model to be output is created.

It is preferable that the control device further include a user interface device for presenting a user with the plurality of dynamic characteristic models and evaluation index values for each of the plurality of dynamic characteristic models and receiving a selection for creating a dynamic characteristic model to be output, from the user.

It is preferable that the control device is configured to execute a user program which defines functions related to the input device, the collection device, and the creation device, in which a range for an object of the dynamic characteristic model is determined based on a variable which is designated in the user program.

It is preferable that the input device applies a change of a value having a degree of change smaller than a change of a value applied as the identification input and determines the identification input based on a response from the control instrument generated with respect to the change.

It is preferable that the input device applies at least a ramp input as the identification input and determines a magnitude of a ramp inclination of the ramp input based on a response from the control instrument.

According to another aspect of the present invention, there is provided a control program which is executed by a control device connected to a control instrument having a feedback control loop. The control program allows the control device to execute a step of applying an identification input to the control instrument, a step of collecting an identification output, which corresponds to the identification input, from the control instrument, and a step of creating a dynamic characteristic model reflecting dynamic characteristics of a controlled object controlled by the control instrument and dynamic characteristics of the feedback control loop included in the control instrument, based on the identification input and the identification output.

According to further another aspect of the present invention, there is provided a control system including a control instrument which has a feedback control loop, and a control device which is connected to the control instrument. The control device includes an input device for applying an identification input to the control instrument, a collection device for collecting an identification output, which corresponds to the identification input, from the control instrument, and a creation device for creating a dynamic characteristic model reflecting dynamic characteristics of a controlled object controlled by the control instrument and dynamic characteristics of the feedback control loop included in the control instrument, based on the identification input and the identification output.

According to a certain embodiment of the present invention, it is possible to realize a technology of facilitating creation of a dynamic characteristic model related to an arbitrarily selected controlled object.

### BRIEF DESCRIPTION OF THE DRAWINGS

FIG. 1 is a schematic view for describing a configuration of a general control system.
FIG. 2 is a schematic view for describing an application example of a modeling technique according to the present embodiment.
FIG. 3 is a schematic view for describing another application example of the modeling technique according to the present embodiment.
FIG. 4 is a schematic view for describing further another application example of the modeling technique according to the present embodiment.
FIG. 5 is a schematic view for describing still another application example of the modeling technique according to the present embodiment.
FIG. 6 is a schematic view illustrating an example of a control structure in a servo driver configuring the control system according to the present embodiment.
FIG. 7 is a view illustrating an example of a time waveform of a command value and a measurement value with respect to a controlled object which is an object of a dynamic characteristic model.
FIG. 8 is a schematic view illustrating an example of a hardware configuration of a control device according to the present embodiment.
FIG. 9 is a flowchart illustrating a processing procedure of the modeling technique according to the present embodiment.
FIG. 10 is a schematic view illustrating an example of a functional configuration of the control device according to the present embodiment.
FIG. 11 is a view illustrating an example of time series data collected by the control device according to the present embodiment.
FIG. 12 is a view illustrating an example of a function which indicates a dynamic characteristic model used in the modeling technique according to the present embodiment.
FIG. 13 is a view for describing a model indicating a vibrating behavior in a dynamic characteristic model calculated through the modeling technique according to the present embodiment.
FIG. 14 is a view illustrating an example of an interface screen when a user is presented with a candidate of the dynamic characteristic model from the control device according to the present embodiment.
FIG. 15 is a view illustrating an example of the interface screen when a user is presented with a dynamic characteristic model created by the control device according to the present embodiment.
FIG. 16 is a view illustrating another example of the interface screen when a user is presented with a dynamic characteristic model created by the control device according to the present embodiment.
FIG. 17 is a view illustrating an example of a command code of a user program executed by the control device according to the present embodiment.
FIG. 18 is a schematic view illustrating a form in which the modeling technique according to the present embodiment is dispersed and mounted.

### DESCRIPTION OF THE EMBODIMENTS

An embodiment of the present invention will be described in detail with reference to the drawings. In the drawings, the same reference signs will be applied to the same or corresponding portions, and description will not be repeated.

### <A. Background of Modeling Technique and Application Examples>

First, the background of applying a modeling technique according to the present embodiment, application examples, and the like will be described.

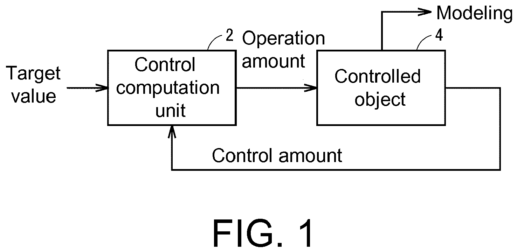

FIG. 1 is a schematic view for describing a configuration of a general control system. FIG. 1 illustrates an application example of controlling a controlled object 4 using a control computation unit 2. In such a control system, the controlled object 4 is modeled and is defined by using a function which indicates the characteristics. The characteristics of a controlled object indicate a relationship of a control amount occurring in a controlled object with respect to an arbitrary operation amount applied from the control computation unit 2. Hereinafter, a function which indicates such characteristics of a controlled object (that is, a transfer function) will be referred to as "dynamic characteristics" or a "dynamic characteristic model".

Generally, a configuration, parameters, and the like of the control computation unit 2 optimal for a controlled object are determined by combining a dynamic characteristic model indicating the characteristics of the controlled object 4 and the control computation unit 2 and performing a simulation. In such a simulation, the degree of concordance or the like between a control amount occurring in a controlled object and a target value are evaluated based on an operation amount computed by the control computation unit 2 to which an arbitrary target value is applied.

In consideration of general systems including a servo driver and a servo motor, elements corresponding to the control computation unit 2 and the controlled object 4 illustrated in FIG. 1 are not uniformly determined but are determined in accordance with application.

The modeling technique according to the present embodiment facilitates creation of a dynamic characteristic model of an arbitrarily set controlled object. Specifically, a dynamic characteristic model of a case where the one or the plurality of elements are taken as a controlled object is calculated based on a relationship between input data (hereinafter, will also be referred to as an "identification input") applied to one or a plurality of arbitrarily set elements and output data (hereinafter, will also be referred to as an "identification output") obtained from the one or the plurality of elements.

A control device 100 according to the present embodiment configures a control system as illustrated in FIG. 1. In this control system, the control device 100 applies an operation amount to a controlled object in accordance with an applied target value and acquires a control amount from the controlled object. However, the control system is not limited to being configured to include the control device 100 and a controlled object. There are cases where the control system is configured to be a control system which includes various types of actuators such as a servo driver and a valve, various types of sensors, or the like. In addition to a case of including only the control device 100, there are cases where the technical scope of the present invention extends to a control system including the control device 100 and other relevant devices and mechanisms.

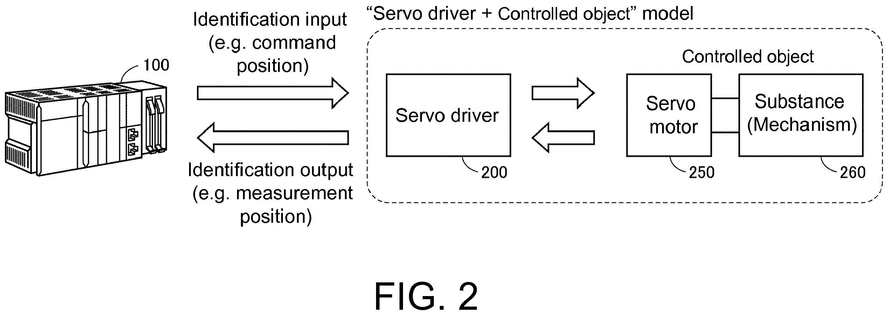

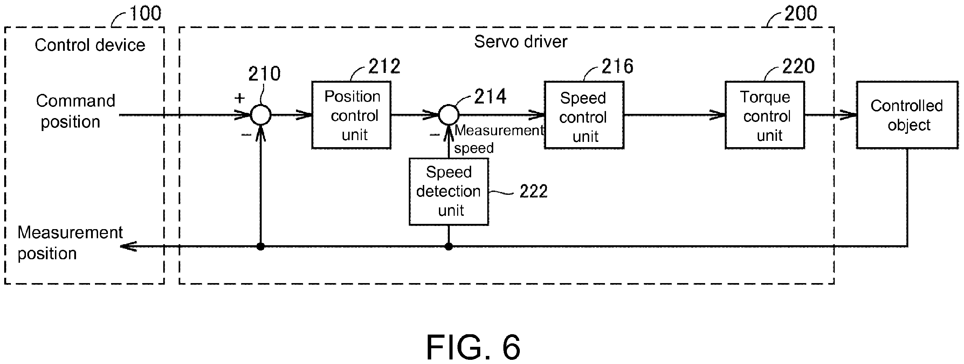

FIGs. 2 to 5 are schematic views for describing application examples of the modeling technique according to the present embodiment. The application examples in FIGs. 2 to 5 illustrate configurations in which the control device 100 drives a controlled object using various types of actuators. FIGs. 2 to 5 illustrate examples of the control system including the control device 100 according to the present embodiment. FIG. 6 is a schematic view illustrating an example of a control structure in a servo driver 200 configuring the control system according to the present embodiment.

FIG. 2 illustrates an application example in which the servo driver 200 connected to the control device 100 drives a controlled object. Typically, the controlled object includes a part or all of manufacturing apparatuses or production machines. In the example illustrated in FIG. 2, the controlled object includes a servo motor 250 which is rotationally driven by the servo driver 200, and a substance 260 which is driven by means of the rotation of the servo motor 250. The substance 260 can include an arbitrary mechanical body. The controlled object includes a delay element generated due to inertia corresponding to a size and a weight, frictional characteristics, spring characteristics, or the like.

In the application example illustrated in FIG. 2, the control computation unit 2 illustrated in FIG. 1 corresponds to the control device 100, and the controlled object 4 illustrated in FIG. 1 corresponds to the servo driver 200 and the controlled object (aggregation of the servo motor 250 and the substance 260). That is, in the application example illustrated in FIG. 2, a dynamic characteristic model having the servo driver 200 and the controlled object (aggregation of the servo motor 250 and the substance 260) gathered together is created.

Here, an example of the control structure mounted in the servo driver 200 will be described. With reference to FIG. 6, the servo driver 200 includes differential computation units 210 and 214, a position control unit 212, a speed control unit 216, a torque control unit 220, and a speed detection unit 222.

The position control unit 212 is a control computation unit configuring a control loop related to a position. The position control unit 212 outputs a speed command as an operation amount corresponding to a positional deviation obtained from the differential computation unit 210. The differential computation unit 210 calculates a deviation with respect to a measurement position (feedback value). Typically, proportional control (P-control) may be used as the position control unit 212. That is, the position control unit 212 may output a value which is obtained by multiplying a positional deviation by a proportional coefficient set in advance, as an operation amount (speed command).

The speed control unit 216 is a control computation unit configuring a control loop related to a speed. The speed control unit 216 outputs torque corresponding to a speed deviation obtained from the differential computation unit 214. The differential computation unit 214 calculates a deviation between an operation amount (speed command) from the position control unit 212 and a measurement speed (feedback value). Typically, proportional integral control (PI-control) may be used as the speed control unit 216. That is, the speed control unit 216 may output a sum of a value which is obtained by multiplying a speed deviation by a proportional coefficient and a value obtained by integrating the speed deviation with an integral element, as an operation amount (torque command).

The speed detection unit 222 detects a measurement speed (or a measurement rotation speed) of the servo motor 250 based on a feedback value (for example, a pulse proportional to the rotation speed of the servo motor 250) from an encoder or the like mounted in the servo motor. Typically, the speed detection unit 222 is realized by using differential elements.

The torque control unit 220 outputs a current command for causing torque output from the speed detection unit 222 to be generated in the servo driver 200, as an operation amount.

In accordance with the operation amount (current command) from the torque control unit 220, a drive circuit (not illustrated) inside the servo driver 200 adjusts switching timing or the like for a current of each phase to be supplied to the servo motor 250.

In this manner, the servo driver 200 according to the present embodiment corresponds to an example of a control instrument having a feedback control loop. That is, the servo driver 200 does not merely function as an amplifier but also executes a control computation as described above. Without being limited to the servo driver, the invention of this application can be applied to an arbitrary control instrument having a feedback control loop.

With reference to FIG. 2 again, on the postulation of such a dynamic characteristic model, a command position can be set as an input with respect to the dynamic characteristic model, and a measurement position can be set as a control amount from the dynamic characteristic model. That is, a command position with respect to a displacement portion of the substance 260 driven by the servo motor 250 is applied, and a measurement result of an actual position (measurement position) of the displacement portion is acquired. The operation amount (that is, a command position as a command value) and the control amount (that is, a measurement position as a measurement value) become the identification input and the identification output respectively.

When a system identification technique is applied using a relationship of the identification output with respect to the identification input, it is possible to create a dynamic characteristic model (the "servo driver + controlled object" model in FIG. 2) related to the servo driver 200 and the controlled object (aggregation of the servo motor 250 and the substance 260). The dynamic characteristic model illustrated in FIG. 2 reflects the characteristics of a feedback control loop mounted in the servo driver 200.

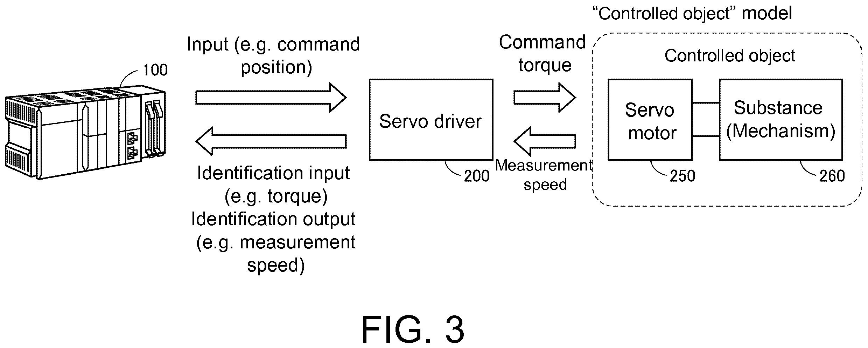

Next, similar to FIG. 2, FIG. 3 illustrates an application example in which the servo driver 200 connected to the control device 100 drives a controlled object.

In the application example illustrated in FIG. 3, the control computation unit 2 illustrated in FIG. 1 corresponds to the aggregation of the control device 100 and the servo driver 200, and the controlled object 4 illustrated in FIG. 1 corresponds to the controlled object (aggregation of the servo motor 250 and the substance 260). That is, in the application example illustrated in FIG. 3, a dynamic characteristic model related to the controlled object (aggregation of the servo motor 250 and the substance 260) is created.

On the postulation of such a dynamic characteristic model, torque can be set as an operation amount which is input to the dynamic characteristic model, and a measurement speed can be set as a control amount from the dynamic characteristic model. That is, when an input such as a command position is input to the servo driver 200 from the control device 100, the servo driver 200 applies torque for realizing the command position to the servo motor 250 as an operation amount.

In the present embodiment, the servo driver 200 calculates torque required for a measurement value (measurement position and/or measurement speed) to follow a command value and causes the servo motor 250 to generate the calculated torque. Therefore, the torque calculated by the servo driver 200 coincides with the torque which is actually generated by the servo motor 250. The "torque" mentioned in the present embodiment is an intermediate variable calculated for the servo motor 250. In the description below, both the torque calculated by the servo driver 200 and the torque generated in the servo motor 250 are set to coincide with each other and are integrally handled.

The servo motor 250 responds with a measurement speed (rotation speed or the like of the servo motor 250) as a control amount. The operation amount (as an example, torque) and the control amount (as an example, a measurement speed as a measurement value) become the identification input and the identification output respectively.

The identification input and the identification output are information exchanged between the servo driver 200 and the servo motor 250. Therefore, the control device 100 acquires the information of the identification input and the identification output via the servo driver 200. Then, when the system identification technique is applied using a relationship of the identification output with respect to the identification input, it is possible to create a dynamic characteristic model ("controlled object" model in FIG. 3) related to the controlled object (aggregation of the servo motor 250 and the substance 260), excluding the dynamic characteristics of a feedback control loop mounted in the servo driver 200.

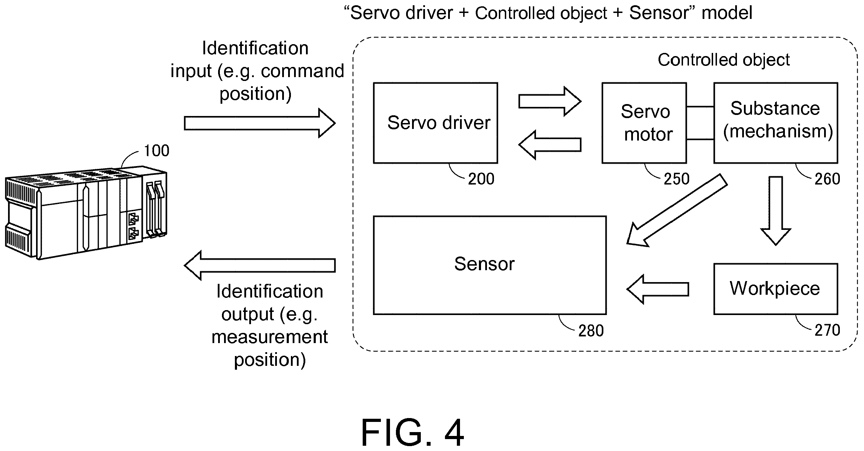

Next, FIG. 4 illustrates an application example in which the servo driver 200 connected to the control device 100 drives a controlled object, and the substance 260 of the controlled object applies some action to a workpiece 270. Displacement of the substance 260 and/or displacement of the workpiece 270 is sensed by an arbitrary sensor 280. For example, a visual sensor or a displacement sensor is postulated as the sensor 280.

In the application example illustrated in FIG. 4, the control computation unit 2 illustrated in FIG. 1 corresponds to the control device 100, and the controlled object 4 illustrated in FIG. 1 corresponds to the servo driver 200, the controlled object (aggregation of the servo motor 250 and the substance 260), the workpiece 270, and the sensor 280. That is, in the application example illustrated in FIG. 4, a dynamic characteristic model having the servo driver 200, the controlled object (aggregation of the servo motor 250 and the substance 260), the workpiece 270, and the sensor 280 gathered together is created.

On the postulation of such a dynamic characteristic model, a command position can be set as an operation amount which is input to the dynamic characteristic model, and a measurement position can be set as a control amount from the dynamic characteristic model. That is, a command position with respect to the workpiece 270 to which a displacement amount is applied by the substance 260 is applied, and a measurement result of actual displacement (measurement position) of the workpiece 270 is acquired. The operation amount (that is, a command position as a command value) and the control amount (that is, a measurement position as a measurement value) become the identification input and the identification output respectively.

When the system identification technique is applied using a relationship of the identification output with respect to the identification input, it is possible to create a dynamic characteristic model ("servo driver + controlled object + sensor" model in FIG. 4) having the servo driver 200, the controlled object (aggregation of the servo motor 250 and the substance 260), the workpiece 270, and the sensor 280 gathered together. The dynamic characteristic model illustrated in FIG. 4 reflects the characteristics of a feedback control loop mounted in the servo driver 200, the detection characteristics of the workpiece 270 obtained by the sensor 280, or the like.

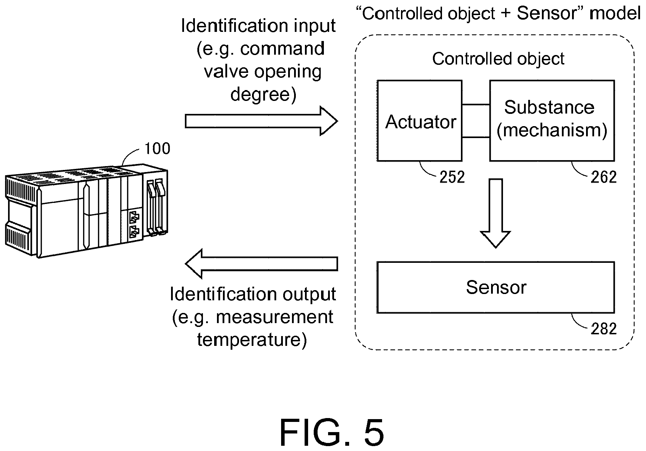

Next, FIG. 5 illustrates an application example in which a change is caused in a controlled object in response to a command from the control device 100, and the change caused in the controlled object is measured. For example, the controlled object includes an actuator 252 such as a valve for changing a flow rate of cooling water or heating water in response to a command from the control device 100, and a substance 262 serving as a heat reservoir for causing a temperature change by means of the cooling water or the heating water controlled by the actuator 252. A change (for example, a temperature change) which can be caused in the substance 262 is sensed by an arbitrary sensor 282. For example, a temperature sensor is postulated as the sensor 282.

In the application example illustrated in FIG. 5, the control computation unit 2 illustrated in FIG. 1 corresponds to the control device 100, and the controlled object 4 illustrated in FIG. 1 corresponds to the controlled object (aggregation of the actuator 252 and the substance 262) and the sensor 282. That is, in the application example illustrated in FIG. 5, a dynamic characteristic model having the controlled object (aggregation of the actuator 252 and the substance 262) and the sensor 282 gathered together is created.

On the postulation of such a dynamic characteristic model, a command valve opening degree can be set as an operation amount which is input to the dynamic characteristic model, and a measurement temperature can be set as a control amount from the dynamic characteristic model. That is, a command valve opening degree with respect to the valve for the actuator 252 which applies a change with respect to the substance 262 is applied, and a measurement result of an actual temperature (measurement temperature) of the substance 262 is acquired. The operation amount (that is, a command valve opening degree as a command value) and the control amount (that is, a measurement temperature as a measurement value) become the identification input and the identification output respectively.

When the system identification technique is applied using a relationship of the identification output with respect to the identification input, it is possible to create a dynamic characteristic model ("controlled object + sensor" model in FIG. 5) having the controlled object (aggregation of the actuator 252 and the substance 262) and the sensor 282 gathered together.

As exemplified above with reference to FIGs. 2 to 5, the modeling technique according to the present embodiment facilitates creation of a dynamic characteristic model for an arbitrary portion in an arbitrary control system.

Depending on the configuration of the control system, the control device 100 and the servo driver 200 are connected to each other via arbitrary communication device. In addition, there are cases where the control device 100 and the sensor 282 are connected to each other via arbitrary communication device. Since the communication device is involved in the control system, a response includes a communication delay with respect to an input. A dynamic characteristic model created through the modeling technique according to the present embodiment also includes characteristics of such a communication delay. Therefore, it is possible to obtain a dynamic characteristic model in which the actual dynamic characteristics of the control system are more accurately reflected.

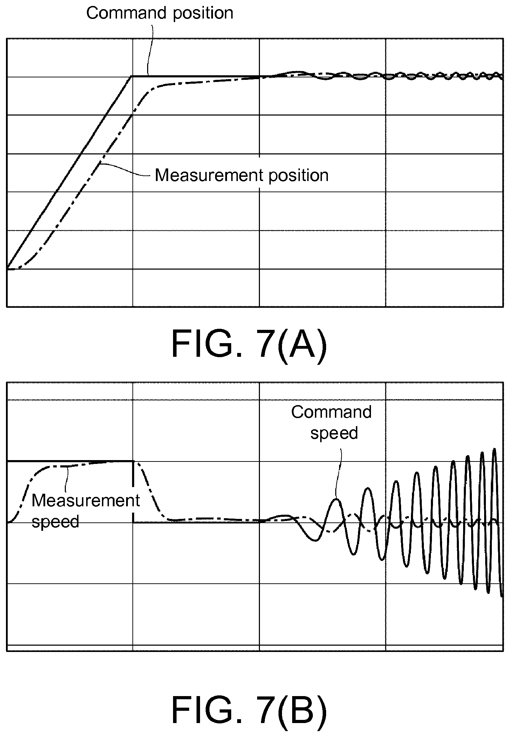

For better understanding, an example of a signal waveform acquired by the control device 100 is illustrated. FIG. 7 is a view illustrating an example of a time waveform of a command value and a measurement value with respect to a controlled object which is an object of a dynamic characteristic model.

FIG. 7(A) illustrates an example of a time waveform of a command position and a time waveform of a measurement position corresponding thereto. FIG. 7(B) illustrates a time waveform of a command speed corresponding to the command position illustrated in FIG. 7(A) and a time waveform of a measurement speed corresponding thereto.

The command position shown in FIG. 7(A) illustrates a time waveform in which a swept sine waveform continues after a time waveform of a ramp input. The command speed illustrated in FIG. 7(B) corresponds to a waveform obtained by a first order differentiation of the command position illustrated in FIG. 7(A) with respect to time.

It is ascertained that the measurement position illustrated in FIG. 7(A) follows the time change of the command position illustrated in FIG. 7(A) with a delay. It is ascertained that the measurement speed illustrated in FIG. 7(B) cannot sufficiently follow the changing speed of the applied command speed when the changing speed exceeds a certain degree. That is, in the latter half of the graph for the time change of the command position illustrated in FIG. 7(B), although both the frequency and the amplitude of the command speed are increasing, the amplitude of the measurement speed is gradually reduced, so that it is possible to mention that the measurement speed cannot sufficiently follow the fast change.

When the system identification technique is applied using a time waveform of the command value and the measurement value (or a signal obtained by converting the time waveform into a frequency region) as illustrated in FIG. 7, a dynamic characteristic model is created.

### <B. Hardware Configuration of Control Device>

Next, a hardware configuration of the control device 100 for realizing the modeling technique according to the present embodiment will be described.

As an example, the control device 100 of the present embodiment may be mounted using a programmable controller (PLC). The control device 100 applies a command value, which is calculated by executing a control program (will be described below, a system program and a user program) stored in advance, to the servo driver 200. The control device 100 acquires a measurement value via the servo driver 200 or an input/output (I/O) unit 126. A dynamic characteristic model related to a controlled object is created using such a command value and a measurement value.

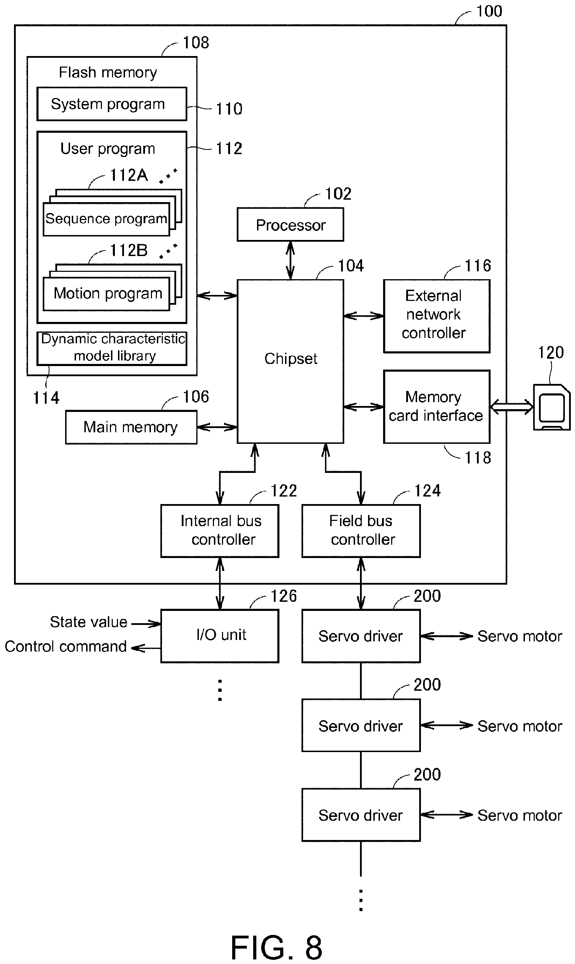

FIG. 8 is a schematic view illustrating an example of a hardware configuration of the control device 100 according to the present embodiment. The control device 100 realizes control over a controlled object when a processor executes the control program installed in advance. With reference to FIG. 8, the control device 100 includes a processor 102 such as a central processing unit (CPU) and a micro-processing unit (MPU), a chipset 104, a main memory 106, a flash memory 108, an external network controller 116, a memory card interface 118, an internal bus controller 122, and a field bus controller 124.

The processor 102 reads out a system program 110 and a user program 112 stored in the flash memory 108, expands and executes the system program 110 and the user program 112 in the main memory 106, and thereby realizes arbitrary control cover a controlled object. The system program 110 includes a command code for providing a basic function of the control device 100, such as input/output processing of data and execution timing control. The user program 112 is arbitrarily designed in accordance with a controlled object and includes a sequence program 112A for executing sequence control and a motion program 112B for executing motion control.

In order to realize the modeling technique according to the present embodiment, the flash memory 108 stores a dynamic characteristic model library 114. The user program 112 may realize processing as described below with reference to the dynamic characteristic model library 114.

The chipset 104 realizes processing of the control device 100 in its entirety by controlling each of the components.

The internal bus controller 122 is an interface for exchanging data with various devices which are interlinked with the control device 100 through an internal bus. As an example of such a device, an example having the I/O unit 126 connected is illustrated.

The field bus controller 124 is an interface for exchanging data with various devices which are interlinked with the control device 100 through a fieldbus. As an example of such a device, an example having the servo driver 200 connected is illustrated.

The internal bus controller 122 and the field bus controller 124 can apply an arbitrary command value with respect to a connected device and can acquire arbitrary data (including a measurement value) which is managed by the device.

The external network controller 116 controls exchanging data through various wired/wireless networks. The memory card interface 118 has a configuration in which a memory card 120 can be attachable and detachable. Through the memory card interface 118, data can be written with respect to the memory card 120 and data can be read out from the memory card 120.

A part or all of functions provided when the control device 100 executes the control program may be mounted as a dedicated hard-wired circuit. For example, a hard-wired circuit can be mounted using an application specific integrated circuit (ASIC) or a field-programmable gate array (FPGA).

### <C. Processing Procedure of Modeling Technique>

Next, a processing procedure of the modeling technique according to the present embodiment will be described. In a general mounting example, a control system including a plurality of control loops (or axes which are objects, in a case of motion control) is established. In such a case, a dynamic characteristic model is created for each control loop or each axis. Such creation processing may be executed in order for each control loop or each axis, or processing of creating a dynamic characteristic model may be executed in a parallel manner with respect to a plurality of control loops or a plurality of axes unless there is a problem of an interference or the like. For the convenience of description, hereinafter, a processing procedure of creating a dynamic characteristic model related to one control loop or one axis will be described.

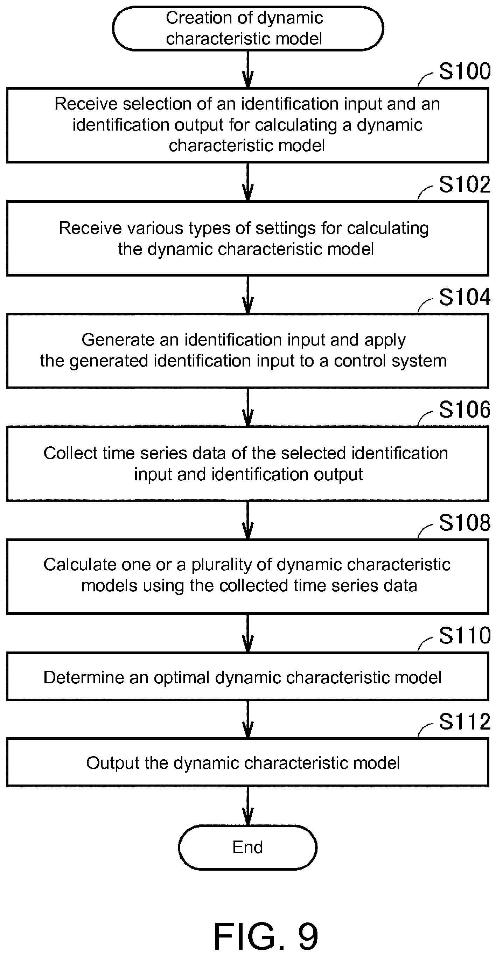

FIG. 9 is a flowchart illustrating a processing procedure of the modeling technique according to the present embodiment. Each of steps illustrated in FIG. 9 may be realized when the processor 102 of the control device 100 executes the control program.

With reference to FIG. 9, the control device 100 receives selection of an identification input and an identification output for calculating a dynamic characteristic model (Step S100) and receives various types of settings for calculating a dynamic characteristic model (Step S102). Then, the control device 100 generates an identification input, applies the generated identification input to the control system (Step S104), and collects time series data of the selected identification input and identification output (Step S106). That is, processing of applying an identification input to the servo driver 200 serving as a control instrument and processing of collecting an identification output corresponding to the identification input from the servo driver 200 serving as a control instrument are executed.

Subsequently, the control device 100 calculates one or a plurality of dynamic characteristic models using the collected time series data (Step S108) and creates an optimal model from the one or the plurality of calculated dynamic characteristic models as a dynamic characteristic model to be output (Step S110). That is, processing of creating a dynamic characteristic model reflecting dynamic characteristics of a controlled object to be controlled by the control instrument and dynamic characteristics of a feedback control loop included in the control instrument is executed based on the identification input and the identification output. In Step S110, selection of an optimal dynamic characteristic model may be received from a user.

Finally, the control device 100 outputs the created dynamic characteristic model (Step S112).

Through a processing procedure as described above, it is possible to create a dynamic characteristic model related to a controlled object which is designated by a user.

### <D. Functional Configuration of Control Device>

Next, a functional configuration of the control device 100 for realizing the modeling technique according to the present embodiment will be described.

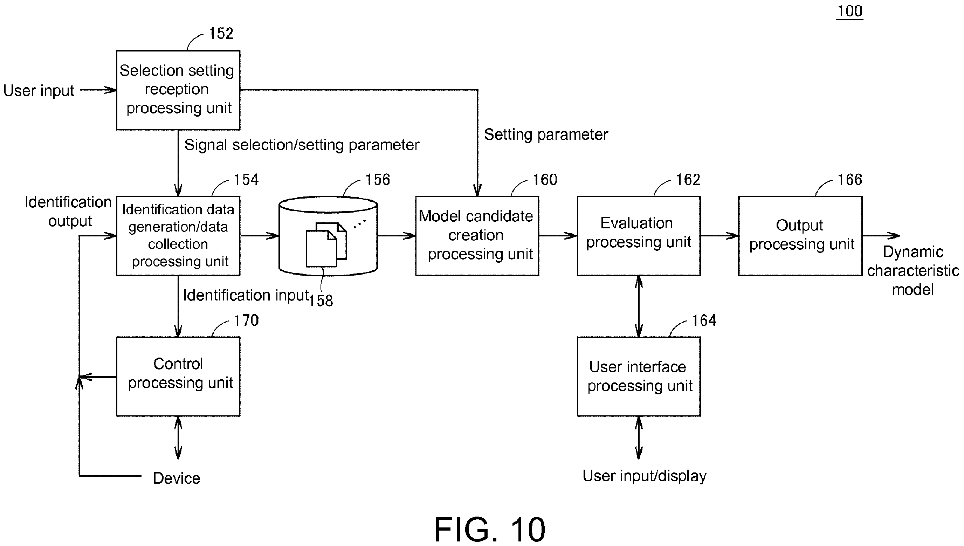

FIG. 10 is a schematic view illustrating an example of a functional configuration of the control device 100 according to the present embodiment. With reference to FIG. 10, as the functional configuration, the control device 100 includes a selection setting reception processing unit 152, an identification data generation/data collection processing unit 154, a data storage processing unit 156, a model candidate creation processing unit 160, an evaluation processing unit 162, a user interface processing unit 164, and an output processing unit 166. The control device 100 includes a control processing unit 170 which applies a command value to a device (for example, a servo driver or various types of actuators (sometimes, via an I/O unit)) and executes an operation in accordance with a designated target value. Each of the processing units may be realized when the processor 102 of the control device 100 executes the control program.

The selection setting reception processing unit 152 receives selection of an input point (first value) of the control system applying an identification input for calculating a dynamic characteristic model and an output point (second value) of the control system acquiring an identification output. Moreover, the selection setting reception processing unit 152 also receives various types of setting for calculating a dynamic characteristic model from a user.

More specifically, the selection setting reception processing unit 152 receives designation of a control loop which is a calculation object of a dynamic characteristic model (or an axis which is an object, in a case of motion control). The selection setting reception processing unit 152 can also receive designation of an arbitrary input point (first value) and an arbitrary output point (second value) with respect to a controlled object which is a calculation object of a dynamic characteristic model. In this manner, an arbitrary input point and an arbitrary output point can be designated. Therefore, in addition to a dynamic characteristic model related to the servo driver 200 and the controlled object (aggregation of the servo motor 250 and the substance 260), it is possible to easily calculate a dynamic characteristic model for only the controlled object (aggregation of the servo motor 250 and the substance 260).

The identification data generation/data collection processing unit 154 provides an input function of applying an identification input to the servo driver 200 serving as a control instrument, and a collection function of collecting an identification output, which corresponds to the identification input, from the servo driver 200 serving as a control instrument.

More specifically, the identification data generation/data collection processing unit 154 applies a command value as an identification input to the control processing unit 170 in accordance with information, a setting parameter, or the like of signal selection received by the selection setting reception processing unit 152. The control processing unit 170 applies an identification input to a device connected to the control device 100 (for example, a servo driver or various types of actuators (sometimes, via an I/O unit)). In addition, as a response with respect to an identification input, the identification data generation/data collection processing unit 154 collects a measurement value designated from a device connected to the control device 100 (for example, a servo driver or various types of sensors) via the control processing unit 170 or directly. The control device 100, and the servo driver 200 and/or various types of sensors are sometimes connected to each other via a fieldbus or are sometimes connected to each other via the I/O unit 126 instead of the fieldbus. An identification input can be output and an identification output can be acquired through either path of transmitting a signal.

In this manner, the identification data generation/data collection processing unit 154 generates an identification input and applies the generated identification input to a controlled object. In addition, the identification data generation/data collection processing unit 154 collects response data from the controlled object. In general, the response data is used as an identification output. In the configuration as illustrated in FIG. 3, since an operation amount (torque command) calculated in the servo driver 200 is used as an identification input, the identification data generation/data collection processing unit 154 may collect an identification input instead of generating the identification input.

The data storage processing unit 156 stores data collected by the identification data generation/data collection processing unit 154. The data storage processing unit 156 may store a data set 158 for each item of the collected data.

The model candidate creation processing unit 160 creates a dynamic characteristic model reflecting dynamic characteristics of a controlled object controlled by the control instrument (the servo driver 200) and dynamic characteristics of a feedback control loop included in the control instrument, based on the identification input and the identification output. In addition, the model candidate creation processing unit 160 can also create a dynamic characteristic model related to dynamic characteristics of the controlled object based on the identification input and the identification output, excluding the dynamic characteristics of the feedback control loop included in the control instrument (servo driver 200).

More specifically, the model candidate creation processing unit 160 calculates one or a plurality of dynamic characteristic models by applying the system identification technique using the data set 158 stored in the data storage processing unit 156 in accordance with setting parameters or the like received by the selection setting reception processing unit 152. In this manner, the model candidate creation processing unit 160 can calculate a dynamic characteristic model of a controlled object based on an identification input and a response data (identification output). The model candidate creation processing unit 160 may also calculate an evaluation index value for each of the calculated dynamic characteristic models. As an evaluation index value, a degree indicating the reliability of identification (hereinafter, will be also referred to as a "FIT rate"), or the like is used.

The evaluation processing unit 162 evaluates one or a plurality of dynamic characteristic models calculated by the model candidate creation processing unit 160, based on one or a plurality of evaluation criteria, so that a dynamic characteristic model to be output is created. In this manner, the evaluation processing unit 162 can evaluate and check the accuracy and the characteristics of the calculated dynamic characteristic model. The evaluation processing unit 162 may presents a user with information related to one or a plurality of dynamic characteristic models for an evaluation object, so that a dynamic characteristic model to be output last is created in accordance with selection from the user.

The user interface processing unit 164 allows a user to participate in creating a dynamic characteristic model by means of the evaluation processing unit 162. That is, the user interface processing unit 164 presents a user with a plurality of dynamic characteristic models and evaluation index values for the plurality of dynamic characteristic models and receives selection for creating a dynamic characteristic model to be output, from the user.

More specifically, the user interface processing unit 164 presents a user with information (FIT rate, time waveform, or the like) related to one or a plurality of dynamic characteristic models calculated by the model candidate creation processing unit 160 and receives selection from the user. The user interface processing unit 164 outputs a selection command from the user to the evaluation processing unit 162.

The output processing unit 166 outputs a dynamic characteristic model created by the evaluation processing unit 162. As an example, the output processing unit 166 outputs characteristic parameters which define the created dynamic characteristic model. The characteristic parameters defining the dynamic characteristic model will be described below in detail. On the other hand, the output processing unit 166 visually outputs response characteristics of the created dynamic characteristic model. An example of a visual output of response characteristics of a dynamic characteristic model will be described below.

It is possible to realize the modeling technique according to the present embodiment by configuring the processing units as described above.

### <E. Detail of Modeling Technique>

Next, the modeling technique according to the present embodiment will be described in detail. The detailed contents described below correspond to the steps illustrated in FIG. 9 and the processing units illustrated in FIG. 10.

### (e1: Collection of Time Series Data of Identification Input and Identification Output)

First, processing of collecting time series data of an identification input and an identification output will be described. This processing corresponds to Steps S100 to S106 in FIG. 9, and the selection setting reception processing unit 152, the identification data generation/data collection processing unit 154, and the data storage processing unit 156 in FIG. 10.

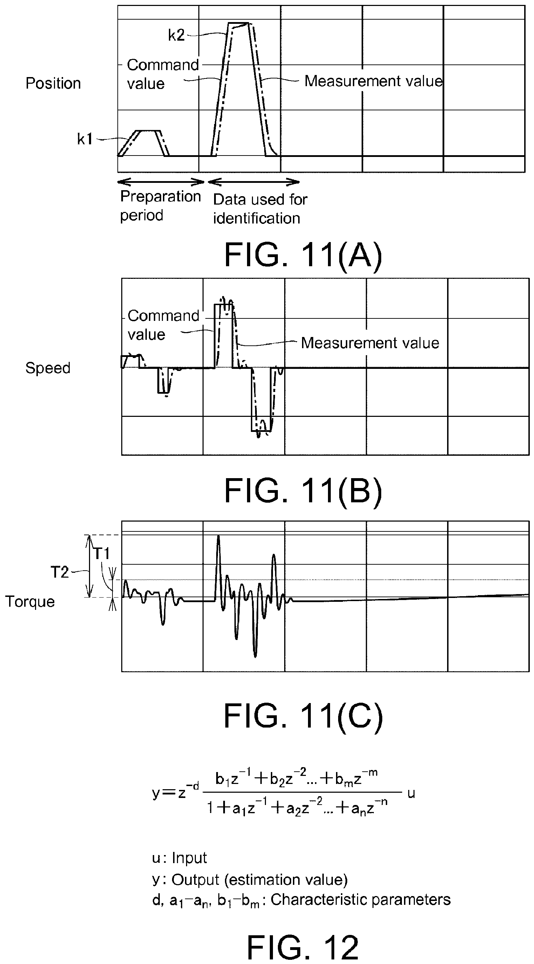

FIGs. 11(A) to 11(C) are views illustrating an example of time series data collected by the control device 100 according to the present embodiment. FIG. 11(A) illustrates an example of time waveforms of a command value (command position) and a measurement value (measurement position) related to a position. FIG. 11(B) illustrates an example of time waveforms of a command value (command speed) and a measurement value (measurement speed) related to a speed. FIG. 11(C) illustrates an example of a time waveform of torque corresponding to the command values illustrated in FIGs. 11(A) and 11(B).

A time waveform selected from the time waveforms of the command value and the measurement value illustrated in FIGs. 11(A) and 11(B) is used as the information for identifying a dynamic characteristic model.

When collecting a time waveform as illustrated in FIGs. 11(A) to 11(C), a range of the variable position (for example, the maximum moving distance) and a range of the variable speed (for example, the maximum speed) may be set in advance by a user. On the other hand, when characteristic values or the like of a controlled object can be acquired in advance, a displacement range may be determined based on the characteristic values.

As a typical example, FIG. 11(A) illustrates an example of using a ramp input as a command position. In contrast to the ramp input of the command position, a step input is used as the command speed illustrated in FIG. 11(B). However, without being limited thereto, the step input may also be used for the command position. In this case, the command speed illustrated in FIG. 11(B) is subjected to an impulse input.

Moreover, as a command value, other signals such as a swept sine waveform may be superposed.

As illustrated in FIGs. 11(A) to 11(C), the command value can be changed in advance independently from a change of the command value for collecting an identification input and an identification output such that an identification input and an identification output suitable for the system identification technique can be collected (refer to a change corresponding to a "creation period" in FIGs. 11(A) to 11(C)). Such a change of the command value during the creation period is used for optimizing the degree of a change in the ramp input (ramp inclination).

For example, in order to appropriately calculate a dynamic characteristic model, it is preferable that sufficiently significant torque (refer to FIG. 11(C)) is output. This sufficiently significant torque includes a range of a value which is equal to or greater than a rated value and less than an upper limit value.

Basically, the ramp inclination (time change amount) of a command position and the step height (maximum value) of a command speed are proportional to the magnitude of generated torque. Therefore, as illustrated in FIG. 11(A), a command value may be applied while having a ramp inclination which is small to a certain degree, as an initial value of the ramp inclination (inclination k1 in FIG. 11(A)) and may determine the magnitude of the ramp inclination (inclination k2 in FIG. 11(A)) suitable for a command position by multiplying the initial value of the ramp inclination by a ratio of the magnitude of torque generated at that time (T1 in FIG. 11(C)) and the magnitude of torque to be generated (T2 in FIG. 11(C)). That is, suitable magnitude can be calculated as follows: inclination k2 = inclination k1 × T2/T1. When the magnitude of the ramp inclination suitable for the command position is determined, the step height of a corresponding command speed can also be determined.

In this manner, in the modeling technique according to the present embodiment, an original command value may be dynamically calculated by applying a command value in advance causing a change smaller than a command value when collecting an identification input and an identification output.

That is, in a process of generating an identification input according to the present embodiment, a change of a value having a degree of change smaller than a change of a value which is applied as the identification input may be applied, and the identification input may be determined based on a response from the control instrument generated with respect to the change. As an intermediate point, a point of which the value changes depending on a change of the command value applied to an input point of the control system is selected. In the example illustrated in FIGs. 11(A) to 11(C), since at least a ramp input is applied as an identification input, the magnitude of the ramp inclination of the ramp input is determined based on a change of the value of the intermediate point (torque).

The initial value of the ramp inclination may be calculated from a characteristic value or the like of the controlled object. For example, when a characteristic value such as an inertia ratio of a rotary system including a servo motor can be acquired, an initial inclination can be calculated using the inertia ratio.

### (e2: Calculation of Dynamic Characteristic Model)

Next, processing of calculating a dynamic characteristic model will be described. This processing corresponds to Step S108 in FIG. 9, and the model candidate creation processing unit 160 in FIG. 10.

FIG. 12 is a view illustrating an example of a function which indicates a dynamic characteristic model used in the modeling technique according to the present embodiment. As illustrated in FIG. 12, a discrete-time transfer function in which a waste time element and an nth delay element are combined may be used. The function illustrated in FIG. 12 is also referred to as a pulse transfer function. In the dynamic characteristic model illustrated in FIG. 12, a waste time d of a waste time element, variables a₁ - aₙ of an nth delay element, and variables b₁ - bₘ are determined as the characteristic parameters. Optimal values may also be determined for the order n and the order m.

The creation processing (that is, system identification) having such characteristic parameters may be executed through a least squares method using the time waveform of a signal selected as the identification input and the identification output for a controlled object (data set 158 in FIG. 10).

Specifically, each of the values of the characteristic parameters is determined such that an output y, which is calculated when a command value selected as an identification input is applied as a variable u of the dynamic characteristic model illustrated in FIG. 12, coincides with a measurement value selected as an identification output (that is, to minimize an error).

In this case, after the waste time d is determined in advance, a post-calibration time waveform in which the identification output is advanced as much as the determined waste time d is generated, and the element of the remaining transfer function excluding the waste time element may be determined based on the post-calibration time waveform.

A plurality of dynamic characteristic models may be calculated by varying the order n and the order m. In this case, as described below, an optimal dynamic characteristic model is created based on one or a plurality of evaluation criteria.

In this manner, in a process of calculating a dynamic characteristic model, a plurality of dynamic characteristic models may be calculated by varying the characteristic parameters. In this case, one dynamic characteristic model in the plurality of dynamic characteristic models may be created by applying evaluation processing described below.

### (e3: Evaluation and Creation of Dynamic Characteristic Model)

Next, processing of evaluating a dynamic characteristic model and creating an optimal dynamic characteristic model will be described. This processing corresponds to Steps S110 and S112 in FIG. 9, and the evaluation processing unit 162 and the user interface processing unit 164 in FIG. 10.

When a plurality of dynamic characteristic models are calculated, an optimal dynamic characteristic model may be determined after the plurality of dynamic characteristic models are evaluated based on one or a plurality of evaluation criteria. The evaluation criteria include a degree indicating the reliability of identification (FIT rate), validity of a waste time, or the like. In addition, in a case of a static system model, validity of a normal gain may be employed as an evaluation criterion.

The FIT rate is a value indicating the rate of concordance between an output which is calculated when an identification input is applied to a function as illustrated in FIG. 12 defined by the calculated characteristic parameter, and an identification output which is actually collected. In regard to such a FIT rate, it is possible to use a known calculation expression of calculating an error. Basically, a dynamic characteristic model having the maximum FIT rate (that is, having the maximum rate of concordance and the minimum error) may be selected.

In addition, when evaluating dynamic characteristic models, a dynamic characteristic model indicating a specific behavior may be excluded. For example, when a dynamic characteristic model indicates a specific behavior which is not included in the original characteristics of a controlled object, since it is assumed that the specific behavior does not indicate the original characteristics of the original controlled object, the dynamic characteristic model may be excluded as having a problem.

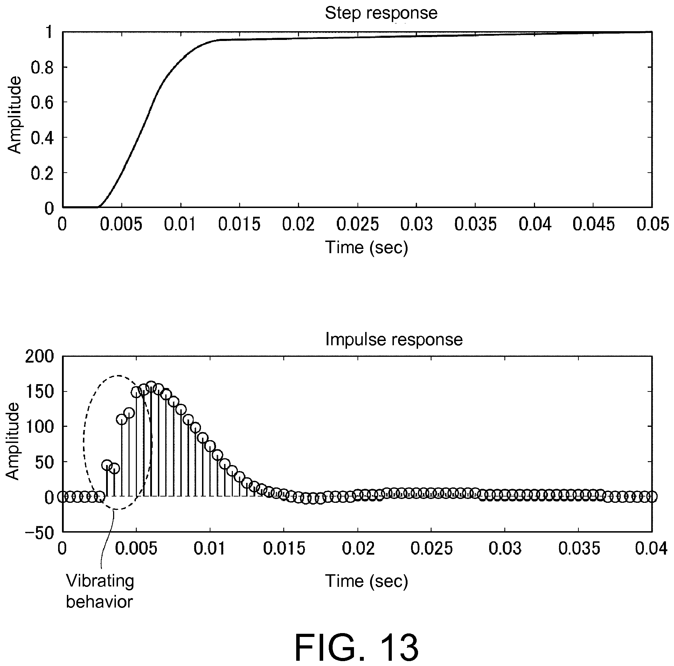

FIG. 13 is a view for describing a model indicating a vibrating behavior in a dynamic characteristic model calculated through the modeling technique according to the present embodiment. In the dynamic characteristic model illustrated in FIG. 13, the magnitude of amplitude fluctuates in a vertical direction during a rising period of an impulse response. In regard to a dynamic characteristic model having such a vibrating behavior, since the vibrating behavior is not assumed to appropriately reflect the characteristics of the controlled object, the vibrating behavior may be excluded from the output object.

The evaluation with respect to a dynamic characteristic model as described above may be automatically executed in the control device 100. On the other hand, after a user is presented with a calculated dynamic characteristic model and a corresponding FIT rate, selection may be received from the user. Presenting a user with a calculated dynamic characteristic model and a FIT rate, and receiving selection from the user may be executed by the user interface processing unit 164 illustrated in FIG. 10.

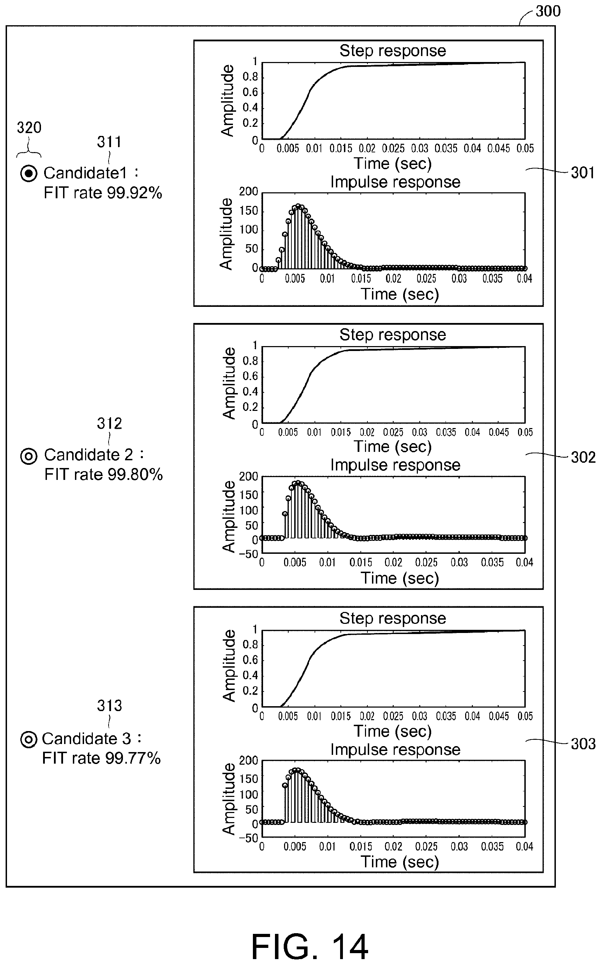

FIG. 14 is a view illustrating an example of an interface screen when a user is presented with candidates of the dynamic characteristic models from the control device 100 according to the present embodiment. An interface screen 300 illustrated in FIG. 14 shows graphs 301 to 303 indicating the characteristics of a plurality of calculated dynamic characteristic models, and FIT rates 311 to 313 of the dynamic characteristic models.

Each of the graphs 301 to 303 indicates the time waveform of the step response and the impulse response of the corresponding dynamic characteristic model (sort of a transfer function). In place of such a time waveform, or together with the time waveform, information such as characteristic parameters defining the calculated dynamic characteristic model and the order of the characteristic parameters may be presented.

A user refers to the interface screen 300 as illustrated in FIG. 14, determines an optimal dynamic characteristic model in the calculated dynamic characteristic models, and selects the dynamic characteristic model which has been considered to be optimal. In the interface screen 300 illustrated in FIG. 14, radio buttons 320 are provided in association with the candidates respectively, and a user selects a radio button 320 which corresponds to a target dynamic characteristic model. The target dynamic characteristic model is output as a final result through such an operation of the user.

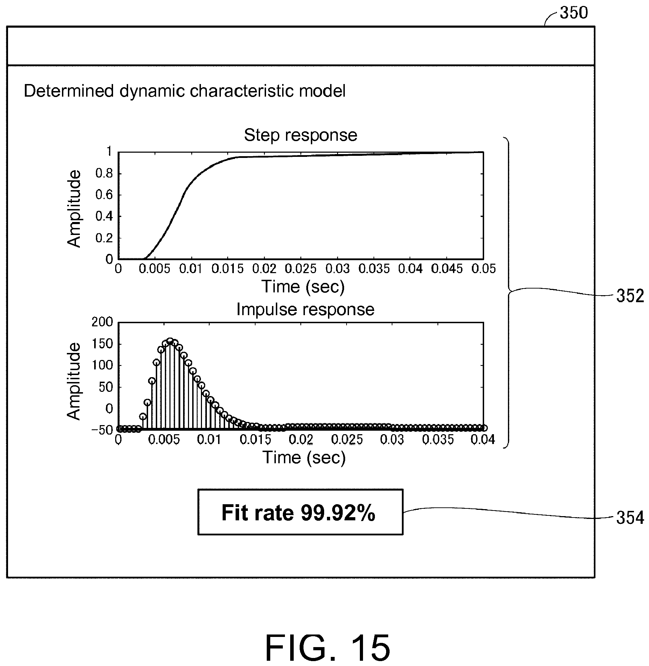

FIG. 15 is a view illustrating an example of the interface screen when a user is presented with a dynamic characteristic model created by the control device 100 according to the present embodiment. When a dynamic characteristic model to be finally output via evaluation processing as described above is determined, a user may be notified of the content thereof via an interface screen 350 as illustrated in FIG. 15. That is, the response characteristics of a determined dynamic characteristic model may be visually output.

The interface screen 350 illustrated in FIG. 15 shows a graph 352 indicating the characteristics of a created dynamic characteristic model, and a FIT rate 354 of the dynamic characteristic model. The graph 352 indicates the time waveform of the step response and the impulse response of the created dynamic characteristic model (sort of transfer function). In place of such a time waveform, or together with the time waveform, information such as characteristic parameters defining the calculated dynamic characteristic model and the order of the characteristic parameters may be presented.

A user can check the response characteristics of the created dynamic characteristic model via the interface screen 350 and can check the value of the FIT rate indicating the accuracy of the calculated dynamic characteristic model.

The interface screen 350 illustrated in FIG. 15 is not necessarily presented. The configuration is acceptable even when the characteristic parameters defining the created dynamic characteristic model are caused to be transferred only to different processing through internal processing of the control device 100.

Through the processing as above, an optimal dynamic characteristic model is finally output from one or a plurality of dynamic characteristic models to be calculated.

In addition, as illustrated in FIGs. 2 to 5 described above, when a variation of a range for the object of a dynamic characteristic model is postulated in advance, each of the dynamic characteristic models may be automatically created, and a user may be presented with each of the dynamic characteristic models.

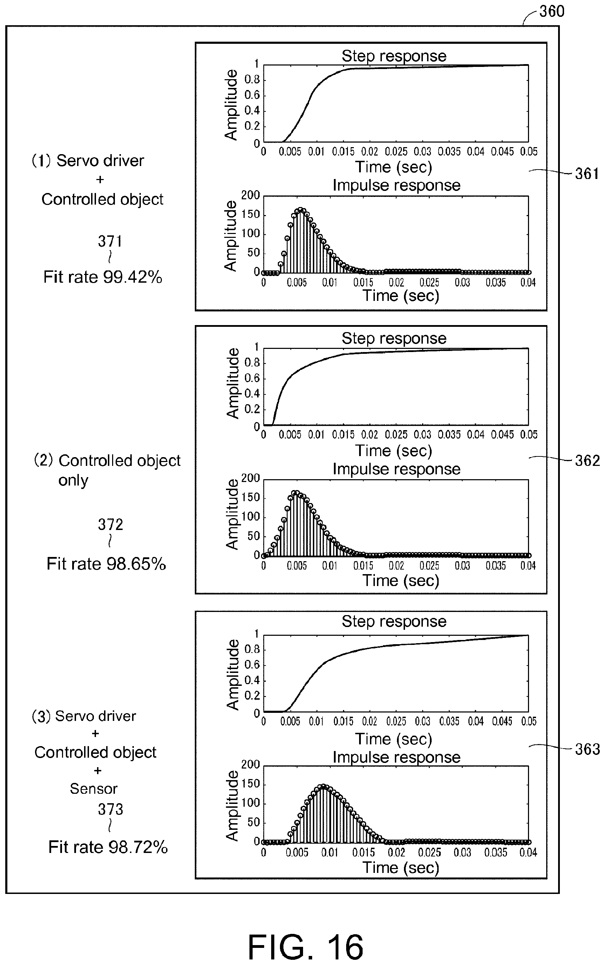

FIG. 16 is a view illustrating another example of the interface screen when a user is presented with a dynamic characteristic model created by the control device 100 according to the present embodiment. When a plurality of dynamic characteristic models having objects different from each other are created individually, a user may be notified of the content thereof via an interface screen 360 as illustrated in FIG. 16. That is, the response characteristics of each of the created dynamic characteristic models of which the controlled objects are different from each other may be visually output.

The interface screen 360 illustrated in FIG. 16 shows graphs 361 to 363 indicating the characteristics of each of the created dynamic characteristic models, and FIT rates 371 to 373 of each of the dynamic characteristic models. The graphs 361 to 363 indicate the time waveform of the step response and the impulse response of each of the dynamic characteristic models (a sort of transfer function). In place of such a time waveform, or together with the time waveform, information such as characteristic parameters defining the calculated dynamic characteristic model and the order of the characteristic parameters may be presented.

### <F. Example of Programming>

The modeling technique according to the present embodiment can be executed by describing a command in the user program 112 executed in the control device 100. Hereinafter, an example of programming of the modeling technique according to the present embodiment will be described.

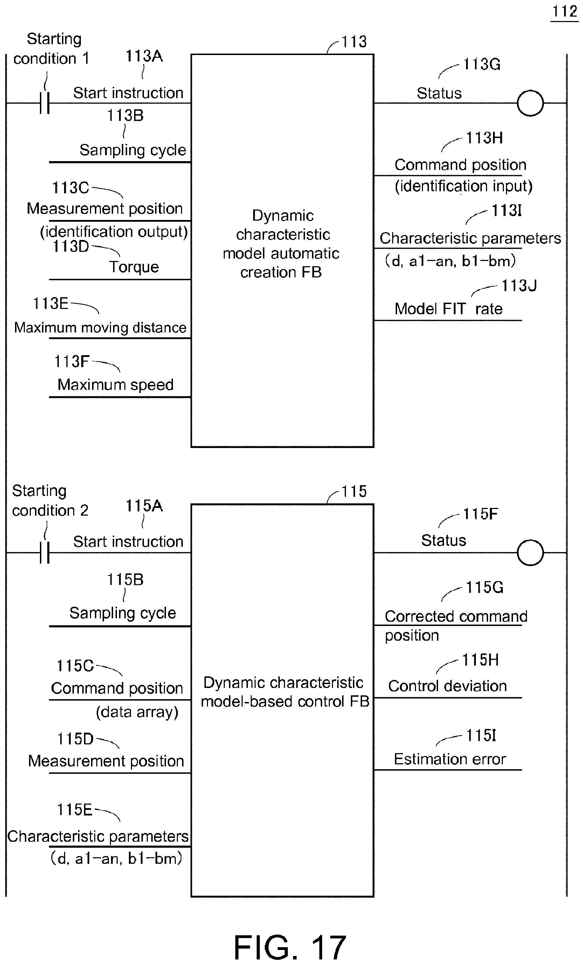

FIG. 17 is a view illustrating an example of a command code of the user program 112 executed by the control device 100 according to the present embodiment. The user program 112 illustrated in FIG. 17 includes two function blocks (hereinafter, will be also expressed as "FB"). The first function block is a dynamic characteristic model automatic creation FB 113 for defining execution of the modeling technique according to the present embodiment, and the second function block is a model-based control FB 115 for defining execution of model estimation control utilizing a dynamic characteristic model created through the modeling technique according to the present embodiment.

For the convenience of description, the dynamic characteristic model automatic creation FB 113 and the model-based control FB 115 are disclosed side by side. However, these may be individually used.

As input items, the dynamic characteristic model automatic creation FB 113 includes a start instruction 113A, a sampling cycle 113B, an identification output 113C, a torque 113D, a maximum moving distance 113E, a maximum speed 113F, and an identification input 113H. As output items, the dynamic characteristic model automatic creation FB 113 includes a status 113G, characteristic parameters 1131, and a FIT rate 113J.

For example, a condition for starting the modeling technique according to the present embodiment is set for the start instruction 113A. In the example illustrated in FIG. 17, a point of contact corresponding to a starting condition 1 is associated.

A cycle of collecting an identification input and an identification output is set for the sampling cycle 113B.

A signal used as an identification output is set for the identification output 113C. In the example illustrated in FIG. 17, a measurement position indicating a position of the servo motor is set as an identification output. When the user program 112 is described through variable programming, a variable name indicating a signal to be used as an identification output is set.

A signal indicating torque as a feedback value for creating the magnitude of an identification output as described above with reference to FIG. 11 is set for the torque 113D. In general, a feedback value from the servo driver or the actuator associated with an identification input and an identification output is used.

A maximum value of a movable distance for collecting an identification input and an identification output is set for the maximum moving distance 113E. A maximum value of an allowed speed for collecting an identification input and an identification output is set for the maximum speed 113F.

A signal used as an identification input is set for the identification input 113H. In the example illustrated in FIG. 17, a command position which is a command value related to a position of the servo motor is set as an identification input. When the user program 112 is described through variable programming, the variable name indicating a signal to be used as an identification input is set.

In addition, a value indicating an execution state of processing executed by the dynamic characteristic model automatic creation FB 113 is output from the status 113G.

The characteristic parameters (d, a₁ - aₙ, b₁ - bₘ) defining a dynamic characteristic model created through the modeling technique according to the present embodiment is output from the characteristic parameter 113I. When the user program 112 is described through variable programming, a variable name indicating a structure for storing the characteristic parameters may be set. These characteristic parameters may be used in the model-based control FB 115.

A FIT rate related to a created dynamic characteristic model is output from the FIT rate 113J.

In this manner, the control device 100 according to the present embodiment is configured to execute the user program in which each of the processing units illustrated in FIG. 10 is defined, using the dynamic characteristic model automatic creation FB 113. The range for the object of a dynamic characteristic model is determined based on a variable which is designated in association with the dynamic characteristic model automatic creation FB 113.

Meanwhile, as input items, the model-based control FB 115 includes a start instruction 115A, a sampling cycle 115B, a command position 115C, a measurement position 115D, and characteristic parameters 115E. As output items, the model-based control FB 115 includes a status 115F, a corrected command position 115G, a control deviation 115H, and an estimation error 115I.

For example, a condition for starting model-based control using a dynamic characteristic model created through the modeling technique according to the present embodiment is set for the start instruction 115A. In the example illustrated in FIG. 17, a point of contact corresponding to a starting condition 2 is associated.

A cycle of executing computation through the model-based control is set for the sampling cycle 115B.

One or a plurality of command values with respect to the servo motor or the actuator of the controlled object is set for the command position 115C. For example, in an application of controlling the course of a robot driven by a servo motor, the course is defined with a plurality of command positions. The command position 115C may be associated with a data array storing such a plurality of command positions.

A measurement value (feedback value) with respect to a command value is set for the measurement position 115D. In the example illustrated in FIG. 17, since a command position is applied as a command value, a measurement position is set for the measurement position 115D as a feedback value thereof.

The characteristic parameters (d, a₁ - aₙ, b₁ - bₘ) output from the characteristic parameters 1131 of the dynamic characteristic model automatic creation FB 113 are input to the characteristic parameter 115E.

In addition, a value indicating an execution state of processing executed by the model-based control FB 115 is output from the status 115F.

A corrected command value which can be obtained from a result of the model estimation control performed in consideration of a dynamic characteristic model indicating the characteristics of a controlled object with respect to a command value input from the command position 115C and a feedback value input from the measurement position 115D, is output from the corrected command position 115G. Instead of a command value set for the command position 115C, the corrected command value output from the corrected command position 115G is applied to the servo driver. When such model estimation control is employed, a result in which the original command value is corrected in accordance with the characteristics of a controlled object can be applied to the controlled object. Therefore, the controlled object can behave in a manner closer to the original command.

A control deviation calculated through the process of calculating a model estimation control is output from the control deviation 115H. An estimation value of an error, which can occur when a corrected command value obtained through the model estimation control is applied to a controlled object, is output from the estimation error 1151.

As described above, in the control device 100 according to the present embodiment, it is possible to create a dynamic characteristic model of a controlled object and to realize model-based control using the created dynamic characteristic model by only describing the user program using two function blocks.

### <G. Application Example of Dynamic Characteristic Model>

A dynamic characteristic model created through the modeling technique according to the present embodiment can be used in the model-based control as described above. Through a similar technique, the embodiment can also be applied to correction or the like with respect to a command value group (for example, a target course) used in robot control or the like.

In addition, when a dynamic characteristic model is cyclically created through the modeling technique according to the present embodiment and a change or the like occurring in the cyclically created dynamic characteristic model is monitored, it is possible to detect a change or the like in the characteristics of a controlled object.

Moreover, since a dynamic characteristic model related to an arbitrary controlled object can be created through a simpler operation, the embodiment can be used for various purposes without being limited to those described above.

### <H. Dispersed Mounting Form>

In the description above, as a typical example, a form of executing all the processing required in the control device 100 is exemplified. The embodiment is not limited to such a mounting form, and the modeling technique according to the present embodiment may be executed in cooperation with a plurality of processing subjects.

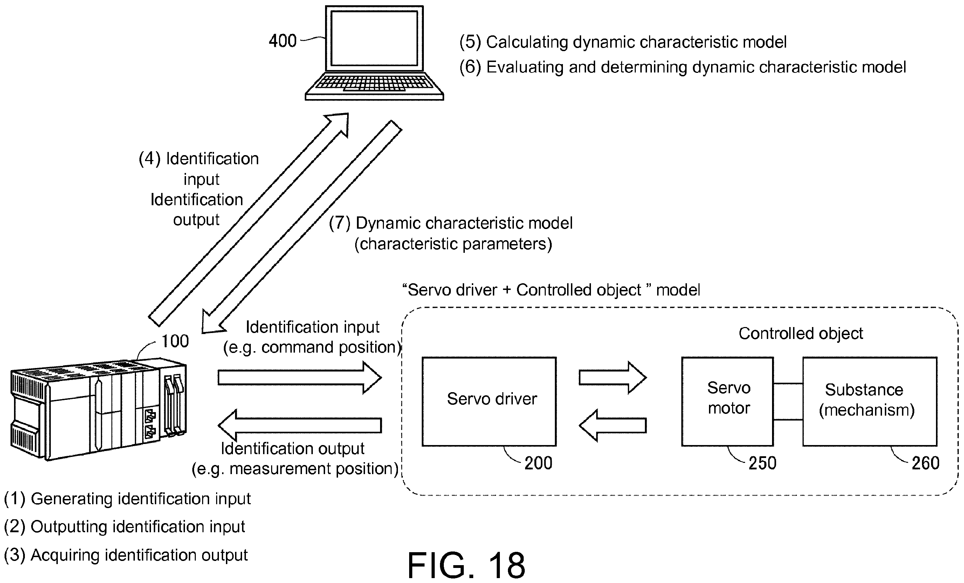

FIG. 18 is a schematic view illustrating a form in which the modeling technique according to the present embodiment is dispersed and mounted. FIG. 18 illustrates a configuration of executing the modeling technique according to the present embodiment while the control device 100 and an information processing device 400 cooperate with each other.

For example, a general personal computer can be used as the information processing device 400. Processing required in the modeling technique according to the present embodiment may be provided by causing a general personal computer to execute a predetermined control program. Since the configuration of a general personal computer is known, detailed description will not be given herein.

The control device 100 and the information processing device 400 are connected to each other such that data can be exchanged via an arbitrary wired or wireless communication means. For example, both the devices may be connected to each other via a wired communication means such as the Ethernet (registered trademark) and a universal serial bus (USB). Both the devices may be connected to each other via a wireless communication means such as a wireless local area network (LAN) and the Bluetooth (registered trademark).

A server on a (public or private) network may be used as the information processing device 400. In this case, a configuration in which the control device 100 can be connected to the server via an arbitrary network is employed.

In the mounting example illustrated in FIG. 18, the control device 100 executes processing of acquiring an identification input and an identification output, and the information processing device 400 executes processing of creating a dynamic characteristic model. Specifically, the control device 100 executes (1) processing of generating an identification input, (2) processing of outputting an identification input, and (3) processing of acquiring an identification output. The identification input and the identification output collected by the control device 100 through the processing are transmitted to the information processing device 400. The information processing device 400 executes (5) processing of calculating a dynamic characteristic model, and (6) processing of evaluating and creating a dynamic characteristic model. A created dynamic characteristic model (characteristic parameters defining the dynamic characteristic model) is transmitted from the information processing device 400 to the control device 100 through the processing.

The control device 100 executes the model-based control or the like as described above, using the dynamic characteristic model (characteristic parameters defining the dynamic characteristic model) from the information processing device 400.

The dispersed configuration of the processing as illustrated in FIG. 18 is an example, and processing managed by each of the processing subjects is not limited to that illustrated in FIG. 18. In addition, without being limited to the combination of the control device 100 and the information processing device 400 as illustrated in FIG. 18, more processing subjects may participate in the combination.

### <I. Conclusion>

In the modeling technique according to the present embodiment, as a signal for characteristic measurement (identification input) from the control device 100 or the like, for example, a command position is applied to the servo driver. As response data (identification output) with respect thereto, for example, a feedback value (that is, a measurement position) from the servo motor is collected. In addition, for example, intermediate data such as torque generated by the servo motor is also collected. Then, various dynamic characteristic models related to a controlled object can be created by applying the system identification technique using the collected identification input and identification output.

In the modeling technique according to the present embodiment, since an arbitrary identification input and an arbitrary identification output can be set, as a controlled object which is an object of creating a dynamic characteristic model, it is possible to set an arbitrary range such as (1) a servo driver and a controlled object (mechanism), (2) a controlled object (mechanism) only, and (3) a servo driver, a controlled object (mechanism), and a workpiece.

After such an arbitrary range is set for a controlled object, a dynamic characteristic model related to the set controlled object can be automatically created. Although advanced knowledge and labor are required to create such a dynamic characteristic model, when the modeling technique according to the present embodiment is employed, knowledge related to modeling is not required. In addition, labor for modeling work can be reduced. Then, a controlled object can be controlled with high accuracy using a dynamic characteristic model which is automatically created.

### [Explanation of Labels]

2 control computation unit; 4 controlled object; 100 control device; 102 processor; 104 chipset; 106 main memory; 108 flash memory; 110 system program; 112 user program; 112A sequence program; 112B motion program; 113 dynamic characteristic model automatic creation FB; 113A, 115A start instruction; 113B, 115B sampling cycle; 113C identification output; 113D torque; 113E maximum moving distance; 113F maximum speed; 113G, 115F status; 113H identification input; 1131, 115E characteristic parameters; 113J FIT rate; 114 dynamic characteristic model library; 115 dynamic characteristic model-based control FB; 115C command position; 115D measurement position; 115G corrected command position; 115H control deviation; 1151 estimation error; 116 external network controller; 118 memory card interface; 120 memory card; 122 internal bus controller; 124 field bus controller; 126 I/O unit; 152 selection setting reception processing unit; 154 identification data generation/data collection processing unit; 160 model candidate creation processing unit; 162 evaluation processing unit; 164 user interface processing unit; 166 output processing unit; 170 control processing unit; 200 servo driver; 250 servo motor; 252 actuator; 260, 262 substance; 270 workpiece; 280, 282 sensor; 300, 350 interface screen; 400 information processing device.

## Claims

1. A control device (100) connected to a control instrument (200) having a feedback control loop, the control device (100) comprising:
an input device (152), applying an identification input to the control instrument (200);
a collection device (154), collecting an identification output, which corresponds to the identification input, from the control instrument (200); and
a creation device (160), creating a dynamic characteristic model reflecting dynamic characteristics of a controlled object (4) controlled by the control instrument (200) and dynamic characteristics of the feedback control loop included in the control instrument (200), based on the identification input and the identification output.

2. The control device (100) according to claim 1, further comprising:
an output device (166), outputting a characteristic parameter which defines the created dynamic characteristic model.

3. The control device (100) according to claim 1, further comprising:
an output device (166), visually outputting response characteristics of the created dynamic characteristic model.

4. The control device (100) according to any one of claims 1 to 3, wherein
the creation device (160) creates a plurality of dynamic characteristic models having characteristic parameters different from each other, and
determines one dynamic characteristic model from among the plurality of dynamic characteristic models.

5. The control device (100) according to claim 4, further comprising:
an evaluation device (162), evaluating the plurality of dynamic characteristic models based on one or a plurality of evaluation criteria, to create a dynamic characteristic model to be output.

6. The control device (100) according to claim 4, further comprising:
a user interface device (164), presenting a user with the plurality of dynamic characteristic models and evaluation index values of each of the plurality of dynamic characteristic models and receiving a selection for creating a dynamic characteristic model to be output, from the user.

7. The control device (100) according to any one of claims 1 to 6, wherein
the control device (100) is configured to execute a user program which defines functions related to the input device (152), the collection device (154), and the creation device (160), and
wherein a range for an object of the dynamic characteristic model is determined based on a variable designated in the user program.

8. The control device (100) according to any one of claims 1 to 7, wherein
the input device (152) applies a change of a value having a degree of change smaller than a change of a value applied as the identification input and determines the identification input based on a response from the control instrument (200) generated with respect to the change.

9. The control device (100) according to claim 8, wherein
the input device (152) applies at least a ramp input as the identification input and determines a magnitude of a ramp inclination of the ramp input based on a response from the control instrument (200).

10. A control program which is executed by a control device (100) connected to a control instrument (200) having a feedback control loop and allows the control device (100) to execute:
a step (S104) of applying an identification input to the control instrument (200);
a step (S106) of collecting an identification output, which corresponds to the identification input, from the control instrument (200); and
a step (S108) of creating a dynamic characteristic model reflecting dynamic characteristics of a controlled object (4) controlled by the control instrument (200) and dynamic characteristics of the feedback control loop included in the control instrument (200), based on the identification input and the identification output.

11. A control system comprising:
a control instrument (200) comprising a feedback control loop; and
a control device (100) connected to the control instrument (200),
wherein the control device (100) comprises:
an input device (152), applying an identification input to the control instrument (200);
a collection device (154), collecting an identification output, which corresponds to the identification input, from the control instrument (200); and
a creation device (160), creating a dynamic characteristic model reflecting dynamic characteristics of a controlled object (4) controlled by the control instrument (200) and dynamic characteristics of the feedback control loop included in the control instrument (200), based on the identification input and the identification output.
